(19) Europäisches Patentamt
European Patent Office
Office européen des brevets

(11) **EP 3 484 009 B1**

(12) **EUROPEAN PATENT SPECIFICATION**

(45) Date of publication and mention
of the grant of the patent:
**09.12.2020 Bulletin 2020/50**

(51) Int Cl.:
*H02J 3/40* (2006.01)          *H02P 9/10* (2006.01)
*H02P 9/00* (2006.01)          *F03B 13/00* (2006.01)
*F03B 15/00* (2006.01)

(21) Application number: **18200098.4**

(22) Date of filing: **12.10.2018**

(54) **HYDROPOWER GENERATION SYSTEM**

WASSERKRAFTERZEUGUNGSSYSTEM

SYSTÈME DE GÉNÉRATION D'HYDROÉLECTRICITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2017 JP 2017218638**

(43) Date of publication of application:
**15.05.2019 Bulletin 2019/20**

(73) Proprietor: **Hitachi, Ltd.
Tokyo 100-8280 (JP)**

(72) Inventors:
• **WATANABE, Kenta**
**Tokyo, 100-8280 (JP)**
• **ITO, Tomomichi**
**Tokyo, 100-8280 (JP)**
• **KAWAZOE, Hironari**
**Tokyo, 100-8280 (JP)**
• **TANAKA, Chikara**
**Tokyo, 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A2- 2 750 285     US-A1- 2009 278 354
US-B1- 7 095 597**

**Description**

BACKGROUND OF THE INVENTION

1. Field of the Invention

The present invention relates to a hydropower generation system and is particularly suitable for application to a primary-excitation-type hydropower generation system in which a generator and an electric power system coupled with a water turbine are interconnected via a frequency converter (hereinafter, also referred to as a "FC").

2. Description of Related Art

A hydropower generation system is a power generation system which converts rotation energy into electric energy by rotating a water turbine using a difference in elevation of water and a flow rate of water. The hydropower generation system has the form of connecting a FC between primary winding or secondary winding of a generator and a power system, for the high efficiency of a water turbine by the variable rotation speed. For the FC, a self-excited or separately excited AC/DC converter using a semiconductor switching element such as an IGBT and a thyristor is used.

Compared with a secondary excitation type where the FC is connected to the secondary winding, a primary excitation type of the generator where the FC is connected to the primary winding has been drawing attention in recent years because it has features such as a wider variable speed drive range and contribution to the system stabilization function. However, in an operating range close to the generator rating, the effect of the high efficiency of a water turbine by the variable speed is small. In addition, there is a problem that the power generation efficiency of the system decreases due to power conversion loss of the FC.

In order to solve the problem, a hydropower generation system of the related art has a main circuit (hereinafter, referred to as a "bypass breaker") for short-circuiting two AC output terminals of a FC. When a flow rate or generated electric power is less than a threshold value, the generated electric power is transmitted to a power system via the FC by closing an AC breaker of the FC and opening the bypass breaker. On the other hand, when the flow rate or the generated electric power is larger than the threshold value, the generated electric power is directly supplied to the power system by opening the AC breaker of the FC and closing the bypass breaker. By performing circuit-switching of the FC and the bypass breaker according to the generated electric power and the flow rate of a generator, both avoidance of a decrease in power generation efficiency in an operation region close to a generator rated range and high efficiency of a water turbine in a low power generation region are achieved (see JP-A-2016-158335.

When circuit-switching is performed from the FC to the bypass breaker, if voltage synchronization of two AC voltages (hereinafter, referred to as a system voltage and a generator voltage) at both ends of the bypass breaker is not maintained, at the moment when the bypass breaker is closed, excessive inrush current caused by a voltage amplitude/phase difference, circuit impedance, etc., flows, and thus there is a problem that electric power fluctuation of the generator and the power system is caused. Therefore, it is desirable to perform circuit switching for a system stable operation while the power fluctuation of the generator and the power system is prevented.

An example for solving the problem is to use a speed regulator (a governor) of a water turbine. Specifically, the governor adjusts a flow rate of water flowing into a water turbine and a rotation speed of a generator is changed, in such a manner that a phase difference between the system voltage and the generator voltage is adjusted and a bypass breaker is closed when voltage synchronization is secured. However, in the method using the governor, it is necessary to mechanically operate a needle valve or a guide vane, and thus, generally, control response is slow and there is a problem that it takes time to secure voltage synchronization and close the bypass breaker.

In US 2009/278354 A1 a wind turbine generator system including an AC exciting converter a grid side converter, and a controller configured to control the AC-exciting converter and the grid side converter, the grid side converter, the controller operates a short-circuiting circuit when decrease in the grid voltage and increase in the DC voltage are detected.

**SUMMARY OF THE INVENTION**

The invention is made in view of the above points and is intended to propose a hydropower generation system capable of achieving both prevention of power fluctuation when a bypass breaker is closed and high-speed voltage synchronization.

In order to solve the problem, the invention is hydropower generation system according to claim 1. Dependent claims relate to preferred embodiments of the invention..

According to the invention, both prevention of power fluctuation when a bypass breaker is closed and high-speed voltage synchronization can be achieved.

BRIEF DESCRIPTION OF THE DRAWINGS

FIG. 1 is a block diagram illustrating an example of an overall configuration of a hydropower generation system according to a first embodiment;
FIG. 2 illustrates an overall control block diagram illustrating a configuration example of a control device illustrated in FIG. 1;
FIG. 3 is an internal control block diagram illustrating a configuration example of a circuit breaker control circuit illustrated in FIG. 2;
FIGS. 4A to 4J respectively illustrate examples of waveforms of parts of a hydropower generation system to which the first embodiment is applied; and
FIG. 5 is an overall control block diagram of a hydropower generation system according to a second embodiment.

DESCRIPTION OF EMBODIMENTS

Hereinafter, an embodiment of the invention will be described in detail with reference to the drawings.

First Embodiment

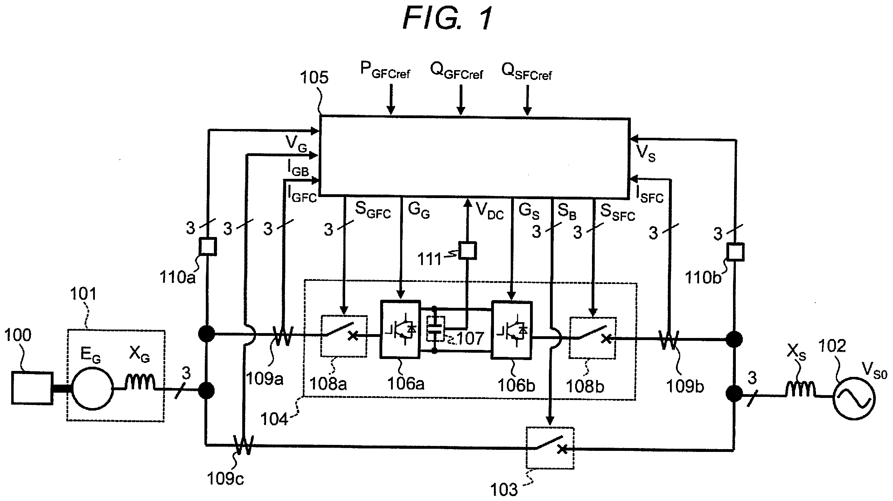

FIG. 1 is a block diagram illustrating an example of an overall configuration of a hydropower generation system according to a first embodiment.

A generator 101 is connected to a water turbine 100 and is interconnected to a power system 102 via a bypass breaker 103 and a frequency converter (hereinafter abbreviated as "FC") 104. Generated electric power of the generator 101 is transmitted to the power system 102 via the bypass breaker 103 or the FC 104.

In the bypass breaker 103, closing/opening is determined according to a bypass breaker operation signal $S_B$ from a control device 105. Details of the bypass breaker 103 will be described hereinafter.

The FC 104 includes two AC/DC converters 106a and 106b, a DC capacitor 107, and two AC breakers 108a and 108b. The AC/DC converter 106a operates with a gate signal $G_G$ from the control device 105 and is driven to transmit the generated electric power of the generator 101 to the power system 102. On the other hand, the AC/DC converter 106b is operated by a gate signal Gs from the control device 105 and is driven in tandem with the power system 102 while a DC voltage $V_{DC}$ of the DC capacitor 107 is controlled to be constant.

In the two FC AC breakers 108a and 108b, closing/opening is determined based on FC AC breaker operation signals $S_{GFC}$ and $S_{SFC}$ from the control device 105.

The control device 105 receives detection values obtained from AC current detectors 109a, 109b, and 109c and AC voltage detectors 110a and 110b, an active power command $P_{GFCref}$ of the FC 104, a reactive power command $Q_{SFCref}$ exchanged with the power system 102, and a reactive power command $Q_{GFCref}$ exchanged with the generator 101, and calculates the gate signals $G_G$ and $G_S$ to be given to the two AC/DC converters 106a and 106b of the FC 104. Further, the control device 105 determines the bypass breaker operation signal $S_B$ of the bypass breaker 103 and the FC AC breaker operation signal $S_{GFC}$, $S_{SFC}$ of the FC AC breakers 108a and 108b.

The AC current detectors 109a, 109c, and 109b detect a current $I_{GFC}$ flowing from the generator 101 to the FC 104, a current $I_{GB}$ flowing from the generator 101 to the bypass breaker 103, and a current $I_{SFC}$ flowing from the FC 104 to the power system 102, respectively, and input the detected current values to the control device 105.

The AC voltage detectors 110a and 110b respectively detect a generator voltage $V_G$ and a system voltage Vs which are voltages at both ends of the bypass breaker 103 and input the detected values to the control device 105.

A DC voltage detector 111 detects the DC voltage $V_{DC}$ of the DC capacitor 107 existing in the DC circuit of the two AC/DC converters 106a and 106b and inputs it to the control device 105.

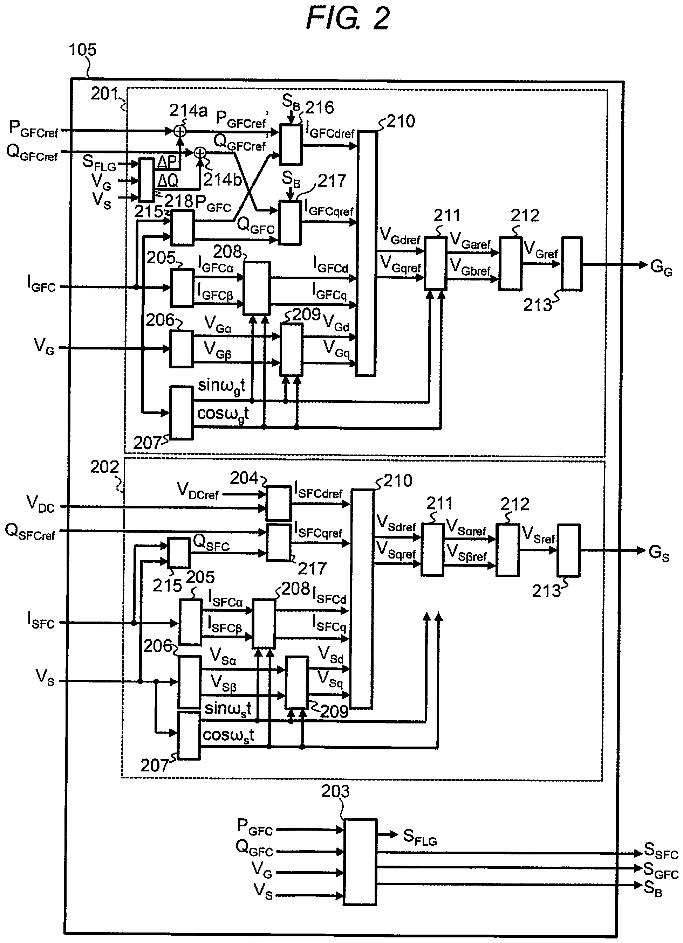

FIG. 2 illustrates an overall control block diagram illustrating a configuration example of the control device 105 illustrated in FIG. 1. The control device 105 includes a generator terminal control circuit 201 for controlling the AC/DC converter 106a on the generator side, a system terminal control circuit 202 for controlling the AC/DC converter 106b on the system side, and an AC breaker control circuit 203 for controlling closing/opening of the three AC breakers.

The generator terminal control circuit 201 controls an active power $P_{GFC}$ of the generator 101 which is transmitted to the power system 102 and a reactive power $Q_{GFC}$ exchanged with the generator 101, so as to follow the active power command $P_{GFCref}$ and the reactive power command $Q_{GFCref}$ of the FC 104.

The system terminal control circuit 202 controls the DC voltage $V_{DC}$ of the DC capacitor 107 so as to follow a DC voltage command value $V_{DCref}$. Further, the reactive power $Q_{SFC}$ exchanged with the power system 102 is controlled to follow the reactive power command $Q_{SFCref}$.

The AC breaker control circuit 203 controls closing/opening of the three AC breakers, that is, the bypass breaker 103 and the FC AC breakers 108a and 108b. The AC breaker control circuit 203 has a function of determining the voltage synchronization of the system voltage $V_S$ and the generator voltage $V_G$.

Next, constituent elements of each circuit will be described with reference to FIG. 2 and the like. The generator terminal control circuit 201 includes α-β coordinate transformations 205 and 206, a system voltage phase detection unit 207, d-q coordinate transformations 208 and 209, an AC current control unit 210, an inverse d-q coordinate transformation 211, an inverse α-β coordinate transformation 212, a gate pulse generating unit 213, adders 214a and 214b, a power calculation unit 215, an active power control unit 216, a reactive power control unit 217, and a power command value adjustment unit 218.

Here, the power command value adjustment unit 218 receives a circuit switching signal $S_{FLG}$ from the AC breaker control circuit 203, the generator voltage $V_G$, the system voltage $V_S$ and outputs corrected power commands ΔP and ΔQ. The circuit switching signal $S_{FLG}$ is a signal for controlling circuit switching of the FC 104 and the bypass breaker 103. In the embodiment, when the circuit switching signal $S_{FLG}$ is 0, the corrected power commands ΔP and ΔQ = 0 is set. On the other hand, when the circuit switching signal $S_{FLG}$ is 1, the corrected effective power and the corrected reactive power capable of ensuring voltage synchronization are outputted as the corrected power commands ΔP and ΔQ.

A specific calculation example of the corrected power commands ΔP and ΔQ is described hereinafter. First, in order to obtain the corrected power command ΔP, an equation of motion of the generator 101 is obtained by Equation (1).

$$\frac{d\omega_G}{dt} = \frac{T_M - P_{GFC}/\omega_G}{J} \quad \ldots(1)$$

Here, J is the moment of inertia of the generator 101, $\omega_G$ is the angular frequency of the generator 101, and $T_M$ is the machine input torque of the generator 101. In Equation (1), a value obtained by dividing the active power $P_{GFC}$, exchanged by the generator 101 and the FC 104, by the angular frequency $\omega_G$ corresponds to the electric output torque of the generator 101.

From Equation (1), the generator keeps the machine input torque $T_M$ and the electric output torque to zero, in such a manner that the rate of change of $\omega_G$ of the generator 101 can be controlled to zero, that is, to a constant speed. In the embodiment, the rotational speed of the generator voltage $V_G$ is changed by intentionally setting a change rate $d\omega_G/dt$ of the rotational speed (rotational frequency) of the generator 101 to a value other than zero. Therefore, the corrected power command ΔP is added to the active power $P_{GFC}$ exchanged by the generator 101 and the FC 104 and the corrected power command ΔP is obtained from Equation (2).

$$\Delta P = -\omega_G\left(J\frac{d\omega_G}{dt} - T_M\right) - P_{GFC} \quad \ldots(2)$$

The corrected power command ΔQ can be calculated by Equation (3) and is obtained from the difference between the reactive power for matching the generator voltage $V_G$ with the system voltage Vs and the reactive power $Q_{GFC}$ exchanged by the generator 101 and the FC 104.

$$\Delta Q = \left(\frac{E_G V_S}{X_G}\cos\delta_G - \frac{E_G^2}{X_G}\right) - Q_{GFC} \quad \ldots(3)$$

Here, $E_G$ is the induced voltage of the generator 101, XG is the leakage reactance of the generator 101,

and $\cos\delta_G$ is the power factor angle of the AC/DC converter 106a. Resistance of generator 101 is ignored as being sufficiently smaller than reactance.

The system terminal control circuit 202 includes a DC voltage control unit 204, α-β coordinate transformations 205 and 206, a system voltage phase detection unit 207, d-q coordinate transformations 208 and 209, an AC current control unit 210, an inverse d-q coordinate transformation 211, an inverse α-β coordinate transformation 212, a gate pulse generating unit 213, a power calculation unit 215, and a reactive power control unit 217.

The AC breaker control circuit 203 receives the active power $P_{GFC}$, the reactive power $Q_{GFC}$ of the FC 104, the generator voltage $V_G$, and the system voltage $V_S$, outputs the circuit switching signal $S_{FLG}$, and further outputs the bypass breaker operation signal $S_B$ and the FC AC breaker operation signals $S_{GFC}$ and $S_{SFC}$ which are closing/opening signals of the bypass breaker 103 and the FC AC breakers 108a and 108b, respectively.

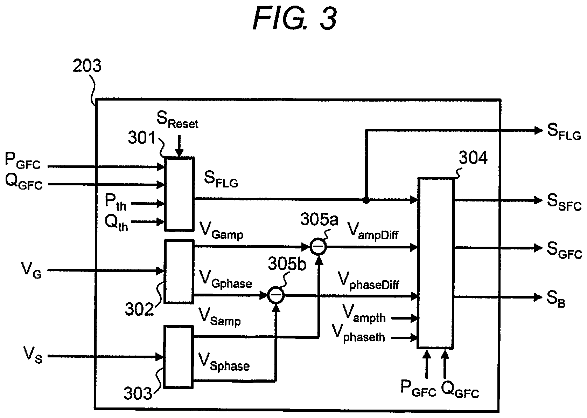

FIG. 3 is an internal control block diagram illustrating a configuration example of the AC breaker control circuit 203 illustrated in FIG. 2. The AC breaker control circuit 203 includes a circuit switching determination unit 301, amplitude/phase calculation units 302 and 303 of the generator voltage $V_G$ and the system voltage $V_S$, a circuit breaker closing/opening signal generation unit 304, and subtractors 305a and 305b.

The circuit switching determining unit 301 receives the active power $P_{GFC}$ and the reactive power $Q_{GFC}$ of the FC 104, compares the active power $P_{GFC}$ and the reactive power $Q_{GFC}$ of the FC 104 with a circuit switching active power Pth and a circuit switching reactive power Qth which are circuit switching threshold values, respectively, and outputs the circuit switching signal $S_{FLG}$.

In the present embodiment, when the active power $P_{GFC}$ and the reactive power $Q_{GFC}$ of the FC 104 described above respectively exceed the circuit switching threshold values Pth and Qth, it is defined that the circuit switching signal $S_{FLG}$ changes from 0 to 1. A value of the circuit switching signal $S_{FLG}$ is held until a switching reset signal $S_{Reset}$ is entered. In the embodiment, a combination of two values of the active power $P_{GFC}$ and the reactive power $Q_{GFC}$ is used as the circuit switching threshold values. However, it is not limited thereto and the active power $P_{GFC}$, the reactive power $Q_{GFC}$, apparent electric power, and the like may be used as the circuit switching threshold values.

The amplitude/phase calculation units 302 and 303 calculate an amplitude $V_{Gamp}$ and a phase $V_{Gphase}$ of the generator voltage $V_G$ and an amplitude $V_{Samp}$ and a phase $V_{Sphase}$ of the system voltage $V_S$. The calculated amplitude $V_{Samp}$ and phase $V_{Sphase}$ are subtracted at the subtractors 305a and 305b at the subsequent stage and an amplitude difference $V_{ampDiff}$ and a phase difference $V_{phaseDiff}$ of the two voltages are calculated. The amplitude difference $V_{ampDiff}$ and the phase difference

$V_{phaseDiff}$ are used to determine voltage synchronization.

The circuit breaker closing/opening signal generation unit 304 receives the active power $P_{GFC}$, the reactive power $Q_{GFC}$ of the FC 104, the circuit switching signal $S_{FLG}$, the amplitude difference $V_{ampDiff}$, and the phase difference $V_{phaseDiff}$, and outputs the bypass breaker operation signal $S_B$ and the FC AC breaker operation signals $S_{GFC}$ and $S_{SFC}$ which are the closing/opening signals of the bypass breaker 103 and the FC AC breakers 108a and 108b, respectively.

The amplitude difference $V_{ampDiff}$ and the phase difference $V_{phaseDiff}$ are respectively compared with an amplitude threshold value $V_{amPth}$ and a phase threshold value $V_{phaseth}$ which are corresponding synchronization determination threshold values. When the $V_{ampDiff}$ and the phase difference $V_{phaseDiff}$ described above are respectively within the synchronization determination threshold values $V_{amPth}$ and $V_{phaseth}$, it is determined that the voltage synchronization of the two voltages is secured. Here, values, in which the power fluctuation, when the bypass breaker 103 is closed, does not affect the stable operation of the device, are used as the synchronization determination threshold values $V_{amPth}$ and $V_{phaseth}$.

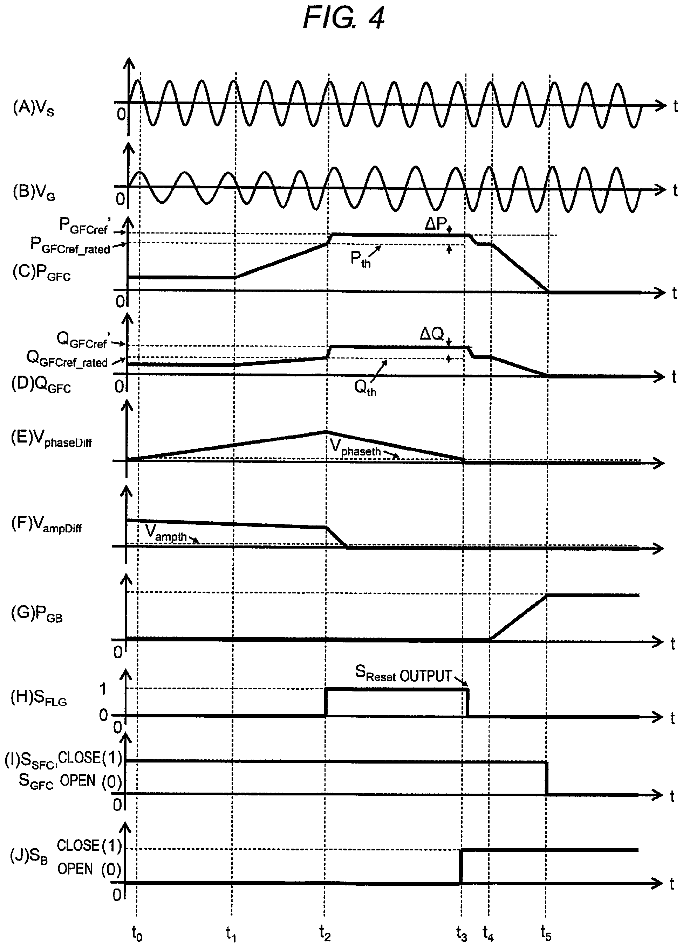

FIGS. 4A to 4J respectively illustrate examples of waveforms of parts of a hydropower generation system to which the embodiment is applied. In the example illustrated in the drawings, the circuit switching is performed from an operating state of a FC interconnection operation (the bypass breaker 103 is open and the FC AC breakers 108a and 108b are closed) to a FC bypass operation (the bypass breaker 103 is closed and the FC AC breakers 108a and 108b are open).

In FIGS. 4A to 4J, from the top, a vertical axis of FIG. 4A indicates the system voltage Vs, a vertical axis of FIG. 4B indicates the generator voltage $V_G$, a vertical axis of FIG. 4C indicates the active power $P_{GFC}$ of the FC 104, a vertical axis of FIG. 4D indicates the reactive power $Q_{GFC}$, a vertical axis of FIG. 4E indicates the phase difference $V_{phaseDiff}$ between the system voltage Vs and the generator voltage $V_G$, a vertical axis of FIG. 4F indicates the amplitude difference $V_{ampDiff}$, a vertical axis of FIG. 4G indicates an electric power $P_{GB}$ which is transmitted from the generator 101 to the power system 102 via the bypass breaker 103, a vertical axis of FIG. 4H indicates the circuit switching signal $S_{FLG}$ of the circuit switching determination unit 301, a vertical axis of FIG. 4I indicates the FC AC breaker operation signals $S_{GFC}$ and $S_{SFC}$, and a vertical axis of FIG. 4J indicates the bypass breaker operation signal $S_B$. Further, a horizontal axis indicates a time t.

The breaker operation signals $S_{GFC}$, $S_{SFC}$, and $S_B$ illustrated in FIG. 4I and 4J open the corresponding breakers when the value is 0, and close them when the value is 1. Further, in the embodiment, the circuit switching threshold values Pth, Qth are respectively set to the rated values of the active power $P_{GFC}$ and the reactive power $Q_{GFC}$ of the FC 104. That is, the circuit switching threshold value Pth=$P_{GFCref\_rated}$ is satisfied, the circuit switching threshold value Qth=$Q_{GFcref\_rated}$ is satisfied.

At the time t0, the hydropower generation system of the embodiment performs the FC interconnection operation with an electric power generated at a low level. At this time, the bypass breaker 103 is open and no current flows, and thus the power $P_{GB}$ to be transmitted to the power system 102 is zero.

When the electric power generated by the generator 101 increases from a time t1 to a time t2, the active power $P_{GFC}$ and the reactive power $Q_{GFC}$ of the FC 104 increase in order to transmit the generated electric power to the power system 102. Then, at the time t2, the active power PGFC and the reactive power $Q_{GFC}$ reach the rated values ($P_{GFCref\_ratred}$, $Q_{GFCref\_rated}$). At this time, the circuit switching threshold values Pth and Qth are exceeded, and thus the circuit switching signal $S_{FLG}$ of the circuit switching determination unit 301 changes from 0 to 1 and the circuit switching from the FC interconnection operation to the FC bypass operation is executed.

Since the circuit switching signal $S_{FLG}$ becomes 1, as the corrected power commands $\Delta P$ and $\Delta Q$ of the power command value adjustment unit 218 illustrated in FIG. 2, values capable of ensuring voltage synchronization are outputted. The corrected power commands $\Delta P$ and $\Delta Q$ are added to the $P_{GFCref}$ and the $Q_{GFCref}$ of the FC 104 by the adder 214a and 214b, respectively, and an active power command value $P_{GFCref'}$ and a reactive power command value $Q_{GFCref'}$ which are corrected are generated. The active power control unit 216 and the reactive power control unit 217 control the active power $P_{GFC}$ and the reactive power $Q_{GFC}$ to follow the corrected active power command value $P_{GFCref'}$ and the corrected reactive power command value $Q_{GFCref'}$, respectively.

In the period from the time t2 to a time t3, only the command value deviates from the $P_{GFCref\_rated}$, which should be outputted from the FC 104, by the corrected power command $\Delta P$, and thus the rotation speed and the frequency of the generator 101 fluctuate. The system voltage Vs is maintained at a substantially constant frequency, and thus the phase difference $V_{phaseDiff}$ varies according to the frequency difference between the generator voltage $V_G$ of which the frequency is varied and the system voltage $V_S$.

That is, the instant at which the phase difference $V_{phaseDiff}$ of the generator voltage $V_G$ and the system voltage $V_S$ crosses the phase threshold value $V_{phaseth}$, always occurs within a certain period. Furthermore, the amplitude $V_{Gamp}$ of the generator voltage $V_G$ can be adjusted by adding the corrected power command $\Delta Q$, and thus the amplitude difference $V_{ampDiff}$ with the amplitude $V_{Samp}$ of the system voltage can be controlled within the amplitude threshold value $V_{amPth}$.

The power command value adjustment unit 218 may be provided with a change rate limiter for increasing or decreasing the corrected power commands $\Delta P$ and $\Delta Q$ on respective ramps as illustrated in FIG. 4, and may be configured to moderate mechanical stress due to rapid acceleration or sudden deceleration of the generator 101 and electrical stress due to voltage sudden change thereof.

When, at the time t3, the amplitude difference $V_{ampDiff}$ and the phase difference $V_{phaseDiff}$ of the system voltage $V_S$ and the generator voltage $V_G$ are within the corresponding synchronization determination threshold values $V_{amPth}$ and $V_{phaseth}$, respectively, the bypass breaker operation signal $S_B$ is set to 1 and the bypass breaker 103 is closed.

After it is confirmed that the bypass breaker 103 is closed, the circuit switching decision unit 301 outputs the switching reset signal $S_{Reset}$ and resets a corrected power command output signal $S_{FLG}$ from 1 to 0. As a result, the corrected power commands $\Delta P$ and $\Delta Q$ become zero.

Even when the bypass breaker 103 is closed, $V_{amPth}$ and $V_{phaseth}$ at which the power fluctuation during the closing of the circuit breaker does not affect the stable operation of the equipment are chosen as described above, and thus the inrush current caused by the closing of the bypass breaker 103 can be suppressed. That is, excessive power fluctuation can be prevented.

In a period from a time t4 to a time t5, the power command value adjustment unit 218 detects closing (the corrected power command output signal $S_{FLG}$ changes from 1 to 0) of the bypass breaker 103 and outputs the corrected power commands $\Delta P$ and $\Delta Q$ which respectively make the active power $P_{GFC}$ and the reactive power QGFC of the FC 104 zero. That is, the active power $P_{GFC}$ and the reactive power $Q_{GFC}$ of the FC 104 are controlled so that the generated electric power of the generator 101 is transmitted to the power system 102 via the bypass breaker 103, not via the FC 104.

At the time t5, the circuit breaker closing/opening signal generation unit 304 detects that the active power $P_{GFC}$ and the reactive power $Q_{GFC}$ of the AC/DC converter 106a of the FC 104 become substantially zero and opens (FC AC breaker operation signals $S_{GFC}$ and $S_{SFC}$=0) the FC AC breakers 108a and 108b. With the above operation, the circuit switching from the FC interconnection operation (FC AC breaker operation signals $S_{GFC}$ and $S_{SFC}$=1, bypass breaker operation signal SB=0) to the FC bypass operation (FC AC breaker operation signals $S_{GFC}$ and $S_{SFC}$=0, bypass breaker operation signal SB=1) is completed.

According to the embodiment, since the bypass breaker 103 is closed after the voltage synchronization between the system voltage Vs and the generator voltage $V_G$ is secured in the hydropower generation system, it is possible to prevent excessive power fluctuation. Further, it is not necessary to ensure voltage synchronization by operation of a mechanical part such as a needle valve or a guide vane, so that the circuit switching described above can be performed at high speed.

Second Embodiment

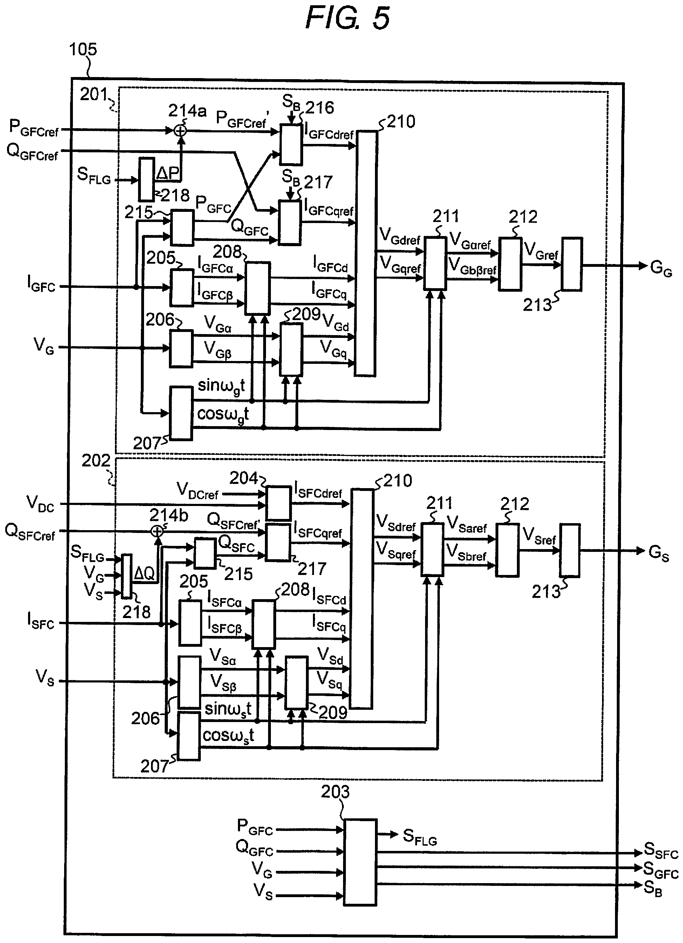

FIG. 5 is an overall control block diagram of a hydropower generation system according to a second embodiment. Since the hydropower generation system according to the second embodiment has almost the same configuration and operation as the hydropower generation system according to the first embodiment, the description of the same configuration and operation will not be repeated and the differences will be mainly described hereinafter.

First, in the hydropower generation system according to the first embodiment, the voltage synchronization is secured by adding the corrected power commands $\Delta P$ and $\Delta Q$ to the generator terminal control circuit 201. On the other hand, in the hydropower generation system according to the second embodiment, as illustrated in FIG. 5, the system terminal control circuit 202 is provided with a power command value adjustment unit 218 and the corrected power command $\Delta Q$ is added to the system terminal control circuit 202.

That is, in the first embodiment, the generator voltage $V_G$ is controlled by a corrective reactive power command $\Delta Q$. However, in the second embodiment, the system voltage $V_S$ is controlled by a corrective reactive power command $\Delta Q$.

The corrected power command $\Delta Q$ in the embodiment can be calculated using Equation (4) and, for example, it is obtained from a difference between the reactive power for matching the system voltage Vs and the generator voltage $V_G$ and the reactive power $Q_{SFC}$ exchanged between the power system 102 and the FC 104.

$$\Delta Q = \left( \frac{V_{S0}V_G}{X_S} \cos \delta_s - \frac{V_{S0}^2}{X_S} \right) - Q_{SFC} \quad \ldots (4)$$

Here, $V_{S0}$ is the voltage of the power system 102, Xs is the interactive reactance with the power system 102, and $\cos \delta_S$ is the power factor angle of the AC/DC converter 106b. The resistance is ignored as being sufficiently smaller than the interactive reactance.

According to the embodiment, since the system voltage Vs is adjusted by addition of the corrected power command $\Delta Q$, voltage synchronization can be secured without affecting the reactive power control (field current control) of the generator 101.

Other Embodiments

The embodiments described above are examples for explaining the invention and it is not intended to limit the invention only to those embodiments. The invention can be implemented in various forms as long as it is not deviated from the point thereof. For example, in the embodiments described above, processing of various programs is described sequentially, but it is not particularly limited thereto. Accordingly, as long as there is no inconsistency in the processing results, the processing order may be switched or configured to parallel operation. In addition, the program including each processing block in the embodiments described above may be stored in a non-transitory storage medium readable by a computer, for example.

The invention can be broadly applied for a primary-excitation-type hydropower generation system in which a power generator and a power system coupled with a water turbine are interconnected via a frequency converter.

## Claims

1.  A hydropower generation system comprising:

    a frequency converter (104) which is provided with two AC output terminals (108a, 108b);
    a water turbine generator which is interconnected to a power system (102) via the frequency converter (104);
    a bypass breaker (103) which includes both ends for short-circuiting the two AC output terminals (108a, 108b) in the frequency converter (104);
    a control device (105) which controls the frequency converter (104) and the bypass breaker (103); and
    a voltage detector (110a, 110b) which detects two AC voltages at both ends of the bypass breaker (103),
    the control device (105) being configured to adjust an output voltage of the frequency converter (104) to a direction in which two AC voltage amplitudes at both ends of the bypass breaker (103) coincide with each other and two voltage phases at both ends of the bypass breaker (103) coincide with each other when the bypass breaker (103) is switched from opening to closing, and output a closing command for closing the bypass breaker (103) when an amplitude difference and a phase difference of the two AC voltages at both ends of the bypass breaker (103) are within respective certain values2 **characterized in that**:

    the control device (105) includes a power command correction unit (218) for correcting each power command value ($P_{GFCref}$; $Q_{SFCref}$; $Q_{GFCref}$) of active power ($P_{GFC}$) and reactive power ($Q_{GFC}$) exchanged between the frequency converter (104) and a generator (101), and
    is configured such that, when the bypass breaker (103) is switched from opening to closing, the frequency converter (104) outputs active power ($P_{GFC}$) and reactive power ($Q_{GFC}$) such that the amplitude difference and the phase difference between the two AC voltages are zero or within respective certain values.

2.  The hydropower generation system according to claim 1, wherein
    the power command correction unit (218) is configured such that, after the bypass breaker (103) is switched from opening to closing, a corrected power command value ($\Delta P$; $\Delta Q$) is adjusted so that each power command value ($P_{GFCref}$; $Q_{SFCref}$; $Q_{GFCref}$) of the frequency converter (104) becomes zero and generated electric power of the generator (101) is transmitted to the power system (102) via the bypass breaker (103).

3.  The hydropower generation system according to claim 1, wherein
    the control device (105) includes an output limiter unit for limiting a rate of change of a corrected power command value ($\Delta P$; $\Delta Q$) of the power command correction unit (218) to be within a predetermined value and suppressing sudden power change due to addition of the corrected power command value ($\Delta P$; $\Delta Q$).

4.  The hydropower generation system according to claim 1, wherein
    the control device (105) includes a power command correction unit (218) for correcting each power command value of active power ($P_{GFC}$) exchanged between the frequency converter (104) and a generator (101) and reactive power ($Q_{GFC}$) exchanged between the frequency converter (104) and a power system (102), and
    is configured such that, when the bypass breaker (103) is switched from opening to closing, the frequency converter (104) outputs active power ($P_{GFC}$) and reactive power ($Q_{GFC}$) such that the amplitude difference and the phase difference between the two AC voltages are zero or within respective certain values.

## Patentansprüche

1.  Wasserkraft-Erzeugungssystem, das Folgendes umfasst:

    einen Frequenzumsetzer (104), der mit zwei Wechselstromausgangsanschlüssen (108a, 108b) versehen ist;
    einen Wasserturbinengenerator, der über den Frequenzumsetzer (104) mit einem Stromversorgungssystem (102) gekoppelt ist;

einen Bypass-Unterbrecher (103), der zum Kurzschließen der zwei Wechselstromausgangsanschlüsse (108a, 108b) im Frequenzumsetzer (104) beide Enden enthält;

eine Steuervorrichtung (105), die den Frequenzumsetzer (104) und den Bypass-Unterbrecher (103) steuert; und

einen Spannungsdetektor (110a, 110b), der zwei Wechselspannungen an beiden Enden des Bypass-Unterbrechers (103) detektiert,

wobei die Steuervorrichtung (105) konfiguriert ist, eine Ausgangsspannung des Frequenzumsetzers (104) in einer Richtung einzustellen, in der zwei Wechselspannungsamplituden an beiden Enden des Bypass-Unterbrechers (103) miteinander übereinstimmen und zwei Spannungsphasen an beiden Enden des Bypass-Unterbrechers (103) miteinander übereinstimmen, wenn der Bypass-Unterbrecher (103) von Öffnen auf Schließen umgeschaltet wird, und einen Schließbefehl zum Schließen des Bypass-Unterbrechers (103) auszugeben, wenn eine Amplitudendifferenz und eine Phasendifferenz der zwei Wechselspannungen an beiden Enden des Bypass-Unterbrechers (103) innerhalb jeweiliger bestimmter Werte liegen,

**dadurch gekennzeichnet, dass**:

die Steuervorrichtung (105) eine Leistungsbefehl-Korrektureinheit (218) zum Korrigieren jedes Leistungsbefehlswertes ($P_{GFCref}$; $Q_{SFCref}$; $Q_{GFCref}$) einer Wirkleistung ($P_{GFC}$) und einer Blindleistung ($Q_{GFC}$), die zwischen dem Frequenzumsetzer (104) und einem Generator (101) ausgetauscht werden, enthält, und

derart konfiguriert ist, dass dann, wenn der Bypass-Unterbrecher (103) von Öffnen auf Schließen umgeschaltet wird, der Frequenzumsetzer (104) eine Wirkleistung ($P_{GFC}$) und eine Blindleistung ($Q_{GFC}$) ausgibt, derart, dass die Amplitudendifferenz und die Phasendifferenz zwischen den zwei Wechselspannungen null sind oder innerhalb jeweiliger bestimmter Werte liegen.

2.  Wasserkraft-Erzeugungssystem nach Anspruch 1, wobei

die Leistungsbefehl-Korrektureinheit (218) derart konfiguriert ist, dass, nachdem der Bypass-Unterbrecher (103) von Öffnen auf Schließen umgeschaltet worden ist, ein korrigierter Leistungsbefehlswert ($\Delta P$; $\Delta Q$) eingestellt wird, derart, dass jeder Leistungsbefehlswert ($P_{GFCref}$; $Q_{SFCref}$; $Q_{GFCref}$) des Frequenzumsetzers (104) null wird und die erzeugte elektrische Leistung des Generators (101) über den Bypass-Unterbrecher (103) an das Stromversorgungssystem (102) übertragen wird.

3.  Wasserkraft-Erzeugungssystem nach Anspruch 1, wobei

die Steuervorrichtung (105) eine Ausgangsbegrenzungseinheit zum Begrenzen einer Änderungsrate eines korrigierten Leistungsbefehlswertes ($\Delta P$; $\Delta Q$) der Leistungsbefehl-Korrektureinheit (218), derart, dass sie innerhalb eines vorgegebenen Wertes liegt, und Unterdrücken einer plötzlichen Leistungsänderung aufgrund des Addierens des korrigierten Leistungsbefehlswertes ($\Delta P$; $\Delta Q$) enthält

4.  Wasserkraft-Erzeugungssystem nach Anspruch 1, wobei

die Steuervorrichtung (105) eine Leistungsbefehl-Korrektureinheit (218) zum Korrigieren jedes Leistungsbefehlswertes einer Wirkleistung ($P_{GFC}$), die zwischen dem Frequenzumsetzer (104) und einem Generator (101) ausgetauscht wird, und einer Blindleistung ($Q_{GFC}$), die zwischen dem Frequenzumsetzer (104) und einem Stromversorgungssystem (102) ausgetauscht wird, enthält, und

derart konfiguriert ist, dass dann, wenn der Bypass-Unterbrecher (103) von Öffnen auf Schließen umgeschaltet wird, der Frequenzumsetzer (104) eine Wirkleistung ($P_{GFC}$) und eine Blindleistung ($Q_{GFC}$) ausgibt, derart, dass die Amplitudendifferenz und die Phasendifferenz zwischen den zwei Wechselspannungen null sind oder innerhalb jeweiliger bestimmter Werte liegen.

**Revendications**

1.  Système de génération de puissance hydraulique comprenant :

un convertisseur de fréquence (104) qui est doté de deux bornes de sortie en courant alternatif (CA) (108a, 108b) ;

un générateur de turbine hydraulique qui est interconnecté à un système de puissance (102) via le convertisseur de fréquence (104) ;

un disjoncteur bypass (103) qui inclut deux extrémités pour court-circuiter les deux bornes de sortie CA (108a, 108b) dans le convertisseur de fréquence (104) ;

un dispositif de commande (105) qui commande le convertisseur de fréquence (104) et le disjoncteur bypass (103) ; et

un détecteur de tension (110a, 110b) qui détecte deux tensions CA aux deux extrémités du disjoncteur bypass (103),

le dispositif de commande (105) étant configuré pour ajuster une tension de sortie du convertisseur de fréquence (104) dans une direction dans laquelle deux amplitudes de tension CA aux deux extrémités du disjoncteur bypass (103) coïncident l'une avec l'autre et deux phases de tension aux deux extrémités du disjoncteur bypass (103) coïncident l'une avec l'autre quand le disjoncteur bypass (103) est commuté depuis une ouverture jusqu'à une fermeture et pour sortir un ordre de fermeture pour fermer le disjoncteur bypass (103) quand une différence d'amplitude et une différence de phase des deux tensions CA aux deux extrémités du disjoncteur bypass (103) sont à l'intérieur de certaines valeurs respectives,

**caractérisé en ce que** :

le dispositif de commande (105) inclut une unité de correction d'ordre de puissance (218) pour corriger chaque valeur d'ordre de puissance ($P_{GFCref}$ ; $Q_{SFCref}$ ; $Q_{GFCref}$) d'une puissance active ($P_{GFC}$) et d'une puissance réactive ($Q_{GFC}$) échangées entre le convertisseur de fréquence (104) et un générateur (101), et est configuré de sorte que, quand le disjoncteur bypass (103) est commuté depuis une ouverture jusqu'à une fermeture, le convertisseur de fréquence (104) sort une puissance active ($P_{GFC}$) et une puissance réactive ($Q_{GFC}$) de sorte que la différence d'amplitude et la différence de phase entre les deux tensions CA sont zéro ou à l'intérieur de certaines valeurs respectives.

2. Système de génération de puissance hydraulique selon la revendication 1, dans lequel l'unité de correction d'ordre de puissance (218) est configurée de sorte que, après que le disjoncteur bypass (103) a commuté depuis une ouverture vers une fermeture, une valeur d'ordre de commande corrigée ($\Delta P$ ; $\Delta Q$) est ajustée de sorte que chaque valeur d'ordre de puissance ($P_{GFCref}$ ; $Q_{SFCref}$ ; $Q_{GFCref}$) du convertisseur de fréquence (104) devient zéro et qu'une puissance électrique générée du générateur (101) est transmise au système de puissance (102) via le disjoncteur bypass (103).

3. Système de génération de puissance hydraulique selon la revendication 1, dans lequel le dispositif de commande (105) inclut une unité de limitation de sortie destinée à limiter un taux de changement d'une valeur d'ordre de puissance corrigée ($\Delta P$ ; $\Delta Q$) de l'unité de correction d'ordre de puissance (218) pour qu'il soit à l'intérieur d'une valeur prédéterminée, et pour supprimer un changement de puissance soudain dû à l'addition de la valeur d'ordre de puissance corrigée ($\Delta P$ ; $\Delta Q$).

4. Système de génération de puissance hydraulique selon la revendication 1, dans lequel le dispositif de commande (105) inclut une unité de correction d'ordre de puissance (218) destinée à corriger chaque valeur d'ordre de puissance d'une puissance active ($P_{GFC}$) échangée entre le convertisseur de fréquence (104) et un générateur (101) et d'une puissance réactive ($Q_{GFC}$) échangée entre le convertisseur de fréquence (104) et un système de puissance (102), et est configuré de sorte que, quand le disjoncteur bypass (103) est commuté d'une ouverture jusqu'à une fermeture, le convertisseur de fréquence (104) sort une puissance active ($P_{GFC}$) et une puissance réactive ($Q_{GFC}$) de sorte que la différence d'amplitude et la différence de phase entre les deux tensions CA sont zéro ou à l'intérieur de certaines valeurs respectives.

## FIG. 1

EP 3 484 009 B1

# FIG. 2

# FIG. 3

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016158335 A
- US 2009278354 A1